# FASCICULE DE BREVET EUROPEEN

(11) **EP 2 142 401 B1**
(45) Date de publication et mention de la délivrance du brevet: **05.03.2014**
(21) Numéro de dépôt: 08788140.5
(22) Date de dépôt: 07.04.2008
(51) Int. Cl.: B60R 19/42, B62D 25/16

(54) **ENSEMBLE D'UNE POUTRE DE CHOCS ET D'UN ABSORBEUR**
STOSSFÄNGERQUERTRÄGER UND ENERGIEABSORBER ANORDNUNG
ASSEMBLY INCLUDING A SHOCK BEAM AND AN ABSORBER

(30) Priorité: 06.04.2007 FR 0754386
(43) Date de publication de la demande: 13.01.2010
(73) Titulaire: Compagnie Plastic Omnium, 69007 Lyon (FR)
(72) Inventeur: BALLESTEROS, Fernando, F-69006 Lyon (FR)
(74) Mandataire: Remy, Vincent Noel Paul
(86) Numéro de dépôt international: PCT/FR2008/050617
(87) Numéro de publication internationale: WO 2009/010668

(56) Documents cités:
- WO-A-03/104030
- WO-A-2004/106146
- DE-A1- 2 135 855
- FR-A- 2 829 734

## Description

La présente invention concerne le domaine technique des modules arrières de véhicule automobile.

Les modules arrières sont soumis à de nombreuses exigences en matière de chocs, spécifiques à chaque pays ou région. Certaines normes, notamment la norme US 581, définissent des exigences spécifiques en matière de « choc coin » inexistantes en Europe, permettant une meilleure protection de la caisse en blanc.

On entend par « choc coin » un impact effectué à vitesse réduite sur un coin arrière du véhicule, selon un angle non nul relativement à la direction longitudinale du véhicule (pour la norme US 581, 1,5 mile/h soit 2,5 km/h et 60°).

Pour satisfaire aux exigences des normes en matière de choc coin, notamment à celles de la norme US 581, on connaît dans l'état de la technique une poutre de chocs arrière placée en regard du pare-chocs arrière du véhicule et comprenant, à chacune de ses extrémités longitudinales correspondant à un coin arrière du véhicule, un absorbeur de chocs réalisé en mousse, comme cela est par exemple décrit dans le document JP9039694.

Un véhicule muni d'une telle poutre satisfait aux exigences des normes en matière de choc coin. Toutefois, les inventeurs à la base de l'invention se sont aperçus que la déformation d'un absorbeur, à l'occasion d'un choc coin, entraîne la déformation de la poutre dans sa totalité, à tel point que les éléments d'absorption de choc arrière (choc selon la direction longitudinale du véhicule provenant de l'arrière et se produisant à vitesse inférieure à 16km/h) situés sur la poutre peuvent être endommagés.

DE 21 35 855 A décrit un véhicule selon le préambule de la revendication 1.

Une poutre selon l'état de la technique, suite à un choc coin, n'est donc plus suffisamment efficace dans le traitement d'un choc arrière ultérieur.

L'invention a pour but de préserver la structure d'absorption du choc arrière de la poutre suite à choc coin.

A cet effet, l'invention a pour objet un véhicule comprenant un ensemble d'une poutre de chocs arrière et d'un absorbeur de chocs caractérisé en ce que la poutre et l'absorbeur comprennent chacun des moyens de fixation à une caisse en blanc de véhicule automobile, l'absorbeur étant conformé pour absorber un choc coin et destiné à être agencé au voisinage d'un coin arrière de la caisse dans le prolongement de la poutre selon sa direction longitudinale, de façon à ménager un dégagement entre une extrémité proximale de la poutre et l'absorbeur, l'absorbeur étant distant intégralement de la poutre.

On entend par « extrémité proximale » de la poutre, l'extrémité de la poutre selon la direction longitudinale de celle-ci qui est la plus proche du coin arrière.

Dans cette configuration, la longueur de la poutre de chocs est diminuée par rapport à celle de l'état de la technique : elle s'étend uniquement jusqu'aux longerons de la caisse en blanc auxquels elle est fixée. L'absorbeur permettant de traiter le choc coin est complètement indépendant de la poutre arrière.

Ainsi, suite au choc coin, l'absorbeur se déforme de façon indépendante de la poutre et, du fait du dégagement, limite son influence sur la poutre, voire, si le dégagement est suffisant pour couvrir la déformation de l'absorbeur, préserve totalement la poutre lors d'un choc coin.

Le remplacement de la poutre n'est alors pas nécessaire après un choc coin, ce qui permet de diminuer le coût des réparations suite à un tel choc.

En outre, cette configuration ne nécessite pas d'employer deux types de poutre selon les pays dans lequel le véhicule est commercialisé. En effet, les inventeurs à la base de l'invention ont prouvé qu'il était suffisant, pour répondre aux normes de choc européennes (notamment à la recommandation ECE42 correspondant au choc arrière latéral, qui est un choc arrière pour lequel l'impact se produit à proximité d'un coin arrière du véhicule) de monter, à l'arrière du véhicule, une poutre s'étendant uniquement jusqu'aux longerons car, lors d'un choc arrière latéral, au vu du galbe du pare-chocs, c'est la partie de la poutre située devant les longerons qui traite le choc. Ainsi, il est possible d'adapter facilement le véhicule aux normes du pays dans lequel il est destiné à être commercialisé, simplement en intégrant ou non, des absorbeurs aux coins du véhicule.

On peut donc avantageusement prévoir que la poutre de l'ensemble selon l'invention est dimensionnée de sorte que chaque extrémité de la poutre selon sa direction longitudinale est apte à être positionnée sensiblement en regard d'un longeron de la caisse en blanc.

Dans un mode de réalisation particulier, l'absorbeur est conformé de sorte que, lorsqu'il est monté sur la caisse en blanc soumise, à l'arrière, à un choc selon une direction longitudinale du véhicule, l'absorbeur est placé dans une configuration déportée dans laquelle il est déporté vers l'extérieur et vers l'avant de la caisse en blanc.

Ainsi, lorsque le véhicule est soumis à un choc arrière, notamment à un choc arrière latéral, l'absorbeur peut être aplati contre la structure de la caisse en blanc de façon à ne pas jouer le rôle de point dur pour le choc arrière, notamment en conformant l'absorbeur de sorte que la paroi externe de celui-ci soit plus proche de la caisse en blanc que la limite de compressibilité de la poutre. Ainsi, le choc arrière est uniquement traité par la poutre arrière qui n'a pas à être adaptée en raison de la présence de points durs supplémentaires. Une poutre existante peut donc, du fait de l'escamotage de l'absorbeur lors d'un choc arrière, être utilisée sans être redimensionnée pour un véhicule comprenant des absorbeurs aux coins du véhicule.

L'absorbeur peut comprendre au moins deux pattes de fixation verticales, inclinées vers l'extérieur du véhicule lorsque l'absorbeur est monté sur le véhicule et un dégagement au voisinage de la caisse en blanc. Ce dégagement permet en effet la rotation de chacune des pattes de fixation vers l'extérieur et l'avant du véhicule suite à un choc arrière et la translation de l'absorbeur relativement à la caisse en blanc.

Les deux pattes de fixation peuvent être inclinées vers l'extérieur du véhicule relativement à la direction longitudinale du véhicule, d'un angle inférieur à l'angle d'une direction d'impact lors d'un choc coin, notamment inférieur à 60°, plus particulièrement compris entre 30° et 60° l'absorbeur comprenant également un bras latéral destiné à s'étendre le long d'une partie latérale arrière de la caisse en blanc. Les deux pattes de fixation amorcent alors une rotation vers le centre du véhicule, entraînant une translation de l'absorbeur vers le centre du véhicule favorisant la compression élastique de l'absorbeur et l'absorption du choc. Cette translation se poursuit jusqu'à ce que le bras latéral de l'absorbeur entre en contact avec la caisse en blanc et bloque la translation, permettant de préserver la poutre arrière.

Dans un mode de réalisation particulier, l'absorbeur comprend un réseau de nervures.

Avantageusement, l'absorbeur comprend des nervures verticales orientées, lorsque l'absorbeur est monté sur le véhicule, vers l'extérieur du véhicule, parallèlement à une direction d'impact lors d'un choc coin, notamment selon un angle compris entre 30 et 80° relativement à la direction longitudinale du véhicule (pour la norme US 581, 60° relativement à la direction longitudinale), de façon à optimiser le traitement du choc coin.

Avantageusement, les nervures sont configurées pour absorber le choc coin lorsque l'absorbeur est dans la configuration déportée.

Les moyens de fixation de l'absorbeur sur la caisse en blanc sont des moyens de fixation par clippage.

De préférence, l'absorbeur est réalisé en matière thermoplastique, notamment en polypropylène (PP).

Optionnellement, l'absorbeur est intégré à un renfort anti-cloquage placé en regard d'une pièce de carrosserie.

L'absorbeur est dépourvu de moyens de fixation directs à la poutre et/ou est distant intégralement de la poutre. De cette façon, la déformation de l'absorbeur lors d'un choc coin influe encore moins sur la poutre.

La présente invention a également pour objet un procédé de montage d'un tel véhicule automobile, dans lequel :
- on fixe la poutre à la caisse en blanc par l'intermédiaire de premiers moyens de fixation,
- on fixe l'absorbeur à la caisse en blanc par l'intermédiaire de deuxièmes moyens de fixation, distincts des premiers moyens.

L'invention sera mieux comprise à la lecture de la description qui va suivre, donnée uniquement à titre d'exemple et faite en se référant aux dessins dans lesquels :
- la figure 1 est une vue de dessus d'un ensemble d'une poutre et d'un absorbeur selon l'invention, montés sur une caisse en blanc de véhicule automobile, dans une configuration initiale
- la figure 2 est une vue de dessus de l'ensemble de la figure 1 suite à un choc coin,
- la figure 3 est une vue de dessus de l'ensemble de la figure 1 suite à un choc latéral.

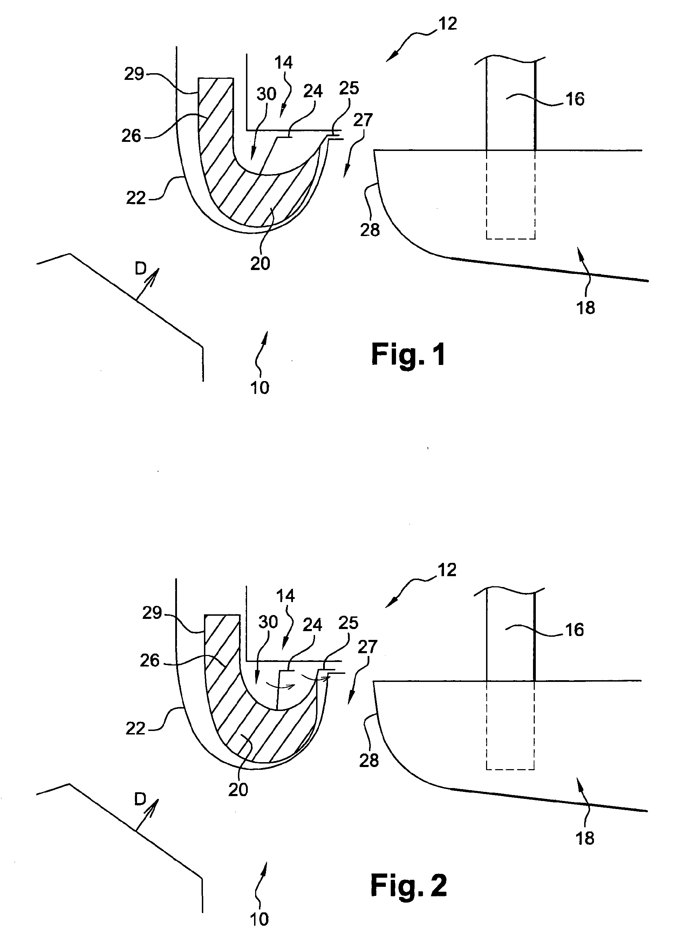

On a représenté sur la figure 1 une partie arrière d'un véhicule automobile 10 comprenant une caisse en blanc 12, dont un coin arrière 14 et un longeron 16 arrière sont plus particulièrement représentés. Une poutre de chocs arrière 18 est rapportée à l'extrémité du longeron arrière 16 à l'aide de moyens de fixation classiques (non représentés). Cette poutre est réalisée en matière plastique ou en métal et comprend des moyens d'absorption de choc arrière tels que des nervures ou une crash box, ces moyens n'étant pas représentés sur les figures.

Un absorbeur de chocs 20, placé en regard d'une pièce de carrosserie 22 (ici, une partie du pare-chocs dans le cas où le véhicule présente une ridelle) est également représenté sur les figures. L'absorbeur 20 est en matière thermoplastique, notamment en polypropylène. Il est placé au voisinage du coin arrière 14 de la caisse en blanc 12 du véhicule automobile et dans le prolongement de la poutre 18 selon sa direction longitudinale. Il est relié à la caisse en blanc 12 par des moyens de fixation comprenant deux pattes de fixation 24, 25 verticales et inclinées vers l'extérieur du véhicule, d'un angle inférieur, relativement à la direction longitudinale du véhicule, à l'angle d'une direction d'impact D lors d'un choc coin (notamment inférieur à 60°). La patte 24 peut être fixée à la caisse en blanc par clippage et la patte 25 peut être fixée à la caisse avec la peau de pare-chocs 22. Les pattes de fixation sont distinctes des moyens de fixation de la poutre à la caisse en blanc. L'absorbeur est dépourvu de moyens de fixation directs à la poutre.

L'absorbeur comprend également un réseau de nervures comprenant des nervures verticales 26 inclinées vers l'extérieur du véhicule selon un angle correspondant à la direction d'impact D lors d'un choc coin.

L'absorbeur 20 est conformé, notamment les moyens de fixation 24, 25 sont arrangés, de sorte qu'un dégagement 27 est ménagé entre une extrémité proximale 28 de la poutre 18, qui est l'extrémité de la poutre dans sa direction longitudinale la plus proche du coin arrière 14, et l'absorbeur, de sorte que l'absorbeur 20 soit intégralement distant de la poutre 18. Un dégagement 30 est également ménagé au voisinage des moyens de fixation 24, 25 entre la caisse en blanc 12 et les moyens d'absorption proprement dits (nervures 26) de l'absorbeur 20, de façon à laisser le mouvement des pattes de fixation 24, 25 libre.

En outre, l'absorbeur 20 comporte un bras latéral 29 s'étendant le long de la partie latérale arrière de la caisse en blanc 12.

Comme cela est représenté sur la figure 2, lorsque le véhicule est soumis à un choc coin de direction D, les pattes de fixation 24, 25 effectuent une rotation vers le centre du véhicule, translatant l'absorbeur 20 vers le centre. Ce mouvement de l'absorbeur est arrêté lorsqu'une surface du bras latéral 29 de celui-ci vient en butée contre la partie latérale de la caisse en blanc 12. L'absorbeur s'est alors déformé et a été déplacé vers le centre du véhicule automobile, réduisant les dimensions du dégagement 27 entre l'absorbeur et l'extrémité proximale 28 de la poutre 18. Dans le même temps, les nervures 26 ont joué un rôle classique d'absorption du choc. Le mouvement de l'absorbeur permet d'améliorer l'absorption du choc en garantissant une plus grande course de déformation en compression élastique à l'absorbeur 20.

Le dégagement 27 permet, lors du mouvement de l'absorbeur vers le centre du véhicule, d'éviter le contact de l'absorbeur 20 avec la poutre 18, de sorte que le remplacement de la poutre 18 après un choc coin n'est pas nécessaire.

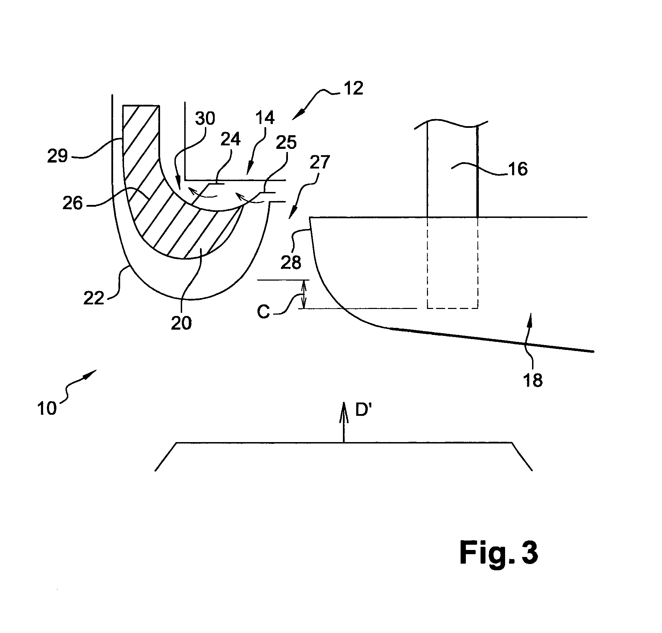

Sur la figure 3, on a représenté la poutre 18, l'absorbeur 20 et le mouvement de l'absorbeur lors d'un choc arrière latéral (en pointillés). Dans ce cas, la direction d'impact est la direction D', correspondant sensiblement à la direction longitudinale du véhicule. Dans le cas d'un tel choc, les pattes de fixation 24, 25 de l'absorbeur 20 ont tendance à entamer une rotation et à se déporter vers l'extérieur et l'avant du véhicule, réduisant la taille du dégagement 30 entre la caisse en blanc 12 et l'absorbeur 20. L'absorbeur est donc aplati contre la paroi arrière de la caisse en blanc de sorte qu'il est situé derrière la limite de compressibilité de la poutre 18. Ainsi, en cas de choc arrière latéral (, c'est la poutre 18, notamment la partie de la poutre 18 située derrière le longeron 16 qui assure le traitement du choc. L'absorbeur 20, du fait de la conformation de ses pattes de fixation, est déplacé dans une configuration déportée. Il ne constitue donc pas un point dur pour un tel choc et ne modifie pas l'absorption du choc.

Il est à noter que les nervures de l'absorbeur sont configurées de sorte que, lorsque l'absorbeur est en configuration déportée, celui-ci est apte à traiter le choc coin. Il n'est donc pas nécessaire de remplacer un absorbeur de choc coin après un choc arrière latéral.

On va maintenant décrire le procédé de montage de l'ensemble de la poutre 18 et de l'absorbeur 20 sur la caisse en blanc 12.

La poutre 18 est tout d'abord montée sur la caisse en blanc 12 et est assemblée avec les longerons arrière 16 de celle-ci au voisinage de chacune de ses extrémités selon la direction longitudinale.

L'absorbeur 20 est ensuite placé sur la caisse en blanc 12 au voisinage d'un coin arrière de la caisse 12. Il est fixé par clippage sur la caisse à l'aide de la patte de fixation 24.

La peau de pare-chocs 22 est ensuite rapportée sur la caisse 12, de façon à recouvrir l'absorbeur 20.

Elle est également fixée à la caisse en blanc 12. Ensuite, on finalise la fixation de l'absorbeur 20 sur la caisse en blanc 12 n fixant la patte 25 de l'absorbeur 20 à la caisse 12 avec la peau de pare-chocs 22, par exemple à l'aide d'une même vis.

On notera que l'invention ne se limite pas au mode de réalisation décrit, celui-ci pouvant recevoir toute modification désirable ne s'étendant pas au-delà du cadre de l'invention.

En variante, l'absorbeur pourrait être intégré à un renfort anti-cloquage placé derrière le pare-chocs ou pourrait être placé en regard d'un pare-chocs monobloc, auquel cas l'absorbeur est fixé à la caisse en blanc indépendamment de la peau de pare-chocs.

La poutre peut également être fixée sur la caisse en blanc postérieurement à l'absorbeur 20.

## Revendications

1. Véhicule automobile (10) comprenant une caisse en blanc (12), une poutre de chocs arrière (18) et un absorbeur de chocs (20), dont la poutre et l'absorbeur comprennent chacun des moyens de fixation (24, 25) à la caisse en blanc (12), l'absorbeur (20) étant conformé pour absorber un choc coin et agencé au voisinage d'un coin arrière (14) de la caisse en blanc (12), dans le prolongement de la poutre (18) dans sa direction longitudinale, de façon à ménager un dégagement (27) entre une extrémité proximale (28) de la poutre (18) et l'absorbeur (20), **caractérisé en ce que** l'absorbeur (20) est distant intégralement de la poutre (18).

2. Véhicule automobile selon la revendication 1, dans lequel l'absorbeur (20) est conformé de sorte que, lorsque la caisse en blanc (12) est soumise, à l'arrière, à un choc selon une direction longitudinale du véhicule, l'absorbeur (20) est placé dans une configuration déportée dans laquelle il est déporté vers l'extérieur et l'avant de la caisse en blanc (12).

3. Véhicule automobile selon la revendication 2, dans lequel l'absorbeur (20) comprend des nervures (26), conformées pour absorber le choc coin lorsque l'absorbeur (20) est dans la configuration déportée.

4. Véhicule automobile selon la revendication 2 ou 3, dans lequel l'absorbeur (20) comprend au moins deux pattes verticales de fixation (24, 25) inclinées vers l'extérieur du véhicule et un dégagement (30) au voisinage de la caisse en blanc (12).

5. Véhicule automobile selon la revendication 4, dans lequel les deux pattes de fixation (24, 25) sont inclinées vers l'extérieur du véhicule, relativement à la direction longitudinale du véhicule, d'un angle inférieur à 60°, plus particulièrement compris entre 30 et 60 °, l'absorbeur (20) comprenant également un bras latéral (29) s'étendant le long d'une partie latérale arrière de la caisse en blanc (12).

6. Véhicule automobile selon l'une quelconque des revendications précédentes, dans lequel l'absorbeur (20) comprend des nervures (26) verticales orientées vers l'extérieur du véhicule, parallèlement à une direction d'impact (D) lors d'un choc coin, notamment selon un angle compris entre 30 et 80°, plus particulièrement selon un angle de 60°, relativement à la direction longitudinale du véhicule.

7. Véhicule automobile selon l'une quelconque des revendications précédentes, dans lequel les moyens de fixation (24) de l'absorbeur (20) sur la caisse en blanc (12) sont des moyens de fixation par clippage.

8. Véhicule automobile selon l'une quelconque des revendications précédentes, dans lequel l'absorbeur (20) est réalisé en matière plastique, notamment en polypropylène (PP).

9. Véhicule automobile selon l'une quelconque des revendications précédentes, dans lequel l'absorbeur (20) est intégré dans un renfort anti-cloquage placé en regard d'une pièce de carrosserie (22) de véhicule automobile.

10. Véhicule automobile selon l'une quelconque des revendications précédentes, dans lequel l'absorbeur (20) est dépourvu de moyens de fixation directs à la poutre (18).

11. Procédé de montage d'un véhicule automobile selon l'une quelconque des revendications précédentes dans lequel :
- on fixe la poutre (18) à la caisse en blanc (12) par l'intermédiaire des premiers moyens de fixation,
- on fixe l'absorbeur à la caisse en blanc par l'intermédiaire des deuxièmes moyens de fixation (24, 25), distincts des premiers moyens.

## Patentansprüche

1. Kraftfahrzeug (10) umfassend eine Rohkarosserie (12), einen rückwärtigen Stoßfängerquerträger (18) und einen Energieabsorber (20), wobei der Querträger und der Energieabsorber jeweils Befestigungsmittel (24, 25) an der Rohkarosserie (12) aufweisen, wobei der Energie-absorber (20) ausgebildet ist, um einen Stoß an der Ecke aufzufangen und in der Nähe der hinteren Ecke (14) der Rohkarosserie (12) in der Verlängerung des Stoßfängerquerträgers (18) in seiner Längsrichtung derart angeordnet ist, um einen Zwischenraum (27) zwischen einem proximalen Ende (28) des Stoßfängerquerträgers (18) und dem Energieabsorber (20) freizulassen, **dadurch gekennzeichnet ist, dass** der Energieabsorber (20) von dem Stoßfängerquerträger (18) vollständig entfernt ist.

2. Kraftfahrzeug nach Anspruch 1, wobei der Energie-absorber (20) derart ausgebildet ist, dass der Energieabsorber (20), wenn die Rohkarosserie (12) auf der Rückseite einem Stoß in eine Längsrichtung des Fahrzeugs ausgesetzt ist, in eine verlagerte Konfiguration positioniert wird, bei der er nach außen und nach vorne zur Rohkarosserie (12) verlagert ist.

3. Kraftfahrzeug nach Anspruch 2, wobei der Energie-absorber (20) Rippen (26) aufweist, die ausgebildet sind, um den Stoß an der Ecke aufzufangen, wenn sich der Energieabsorber (20) in der verlagerten Konfiguration befindet.

4. Kraftfahrzeug nach Anspruch 2 oder 3, wobei der Energieabsorber (20) mindestens zwei vertikale Befestigungslaschen (24, 25), die zur Außenseite des Fahrzeugs hin geneigt sind, und einen Zwischenraum (30) in der Nähe der Rohkarosserie (12) aufweist.

5. Kraftfahrzeug nach Anspruch 4, wobei die beiden Befestigungslaschen (24, 25) zur Außenseite des Fahrzeugs hin in Bezug zur der Längsrichtung des Fahrzeugs in einem Winkel von weniger als 60°, insbesondere zwischen 30 und 60°, geneigt sind, wobei der Energieabsorber (20) ebenfalls einen seitlichen Arm (29) aufweist, der sich entlang eines hinteren Seitenteils der Rohkarosserie (12) erstreckt.

6. Kraftfahrzeug nach einem der vorhergehenden Ansprüche, wobei der Energieabsorber (20) vertikale Rippen (26) aufweist, die zur Außenseite des Fahrzeugs hin, parallel zu einer Stoßrichtung (D) bei einem Stoß an der Ecke, insbesondere in einem Winkel zwischen 30 und 80°, insbesondere in einem Winkel von 60°, in Bezug zur der Längsrichtung des Fahrzeugs geneigt sind.

7. Kraftfahrzeug nach einem der vorhergehenden Ansprüche, wobei die Befestigungsmittel (24) des Energieabsorbers (20) an der Rohkarosserie (12) Mittel zur Befestigung durch Einrasten sind.

8. Kraftfahrzeug nach einem der vorhergehenden Ansprüche, wobei der Energieabsorber (20) aus Kunststoff, insbesondere aus Polypropylen (PP), erstellt ist.

9. Kraftfahrzeug nach einem der vorhergehenden Ansprüche, wobei der Energieabsorber (20) in eine Verstärkung gegen Blasenbildung integriert ist, die gegenüber einem Karosserieteil (22) des Kraftfahrzeugs angeordnet ist.

10. Kraftfahrzeug nach einem der vorhergehenden Ansprüche, wobei der Energieabsorber (20) keine direkten Befestigungsmittel an dem Stoßfängerquerträger (18) aufweist.

11. Verfahren zum Montieren eines Kraftfahrzeugs nach einem der vorhergehenden Ansprüche, wobei:
- der Stoßfängerquerträger (18) durch erste Befestigungsmittel an die Rohkarosserie (12) montiert wird,
- der Energieabsorber durch zweite Befestigungsmittel (24, 25), die von den ersten Befestigungsmitteln verschieden sind, an die Rohkarosserie (12) montiert wird.

## Claims

1. A motor vehicle (10) comprising a body-in-white (12), a rear impact beam (18) and an impact absorber (20), wherein the beam and the absorber include respective fastener means (24, 25) for fastening to the body-in-white (12), the absorber (20) being shaped to absorb a corner impact and being configured to be arranged in the vicinity of a rear corner (14) of the body-in-white (12) in line with the longitudinal direction of the beam (18) and in such a manner as to leave a gap (27) between a proximal end (28) of the beam (18) and the absorber (20),**characterized in that** the absorber (20)being completely spaced apart from the beam (18).

2. A motor vehicle according to claim 1, wherein the absorber (20) is shaped in such a manner that when the body-in-white (12) is subjected at the rear to an impact in a longitudinal direction of the vehicle, the absorber (20) is placed in an offset configuration in which it is offset outwards and forwards relative to the body-in-white (12).

3. A motor vehicle according to claim 2, wherein the absorber (20) includes ribs (26) shaped to absorb the corner impact when the absorber (20) is in the offset configuration.

4. A motor vehicle according to claim 2 or claim 3, wherein the absorber (20) includes at least two vertical fastener tabs (24, 25) inclined towards the outside of the vehicle and a gap (30) in the vicinity of the body-in-white (12).

5. A motor vehicle according to claim 4, wherein the two fastener tabs (24, 25) are inclined towards the outside of the vehicle relative to the longitudinal direction of the vehicle by an angle no greater than 60°, and more particularly an angle lying in the range 30° to 60°, the absorber (20) also including a lateral arm (29) for extending along a rear lateral portion of the body-in-white (12).

6. A motor vehicle according to any preceding claim, wherein the absorber (20) includes ribs (26) that are vertical being oriented towards the outside of the vehicle parallel to the impact direction (D) during a corner impact, in particular at an angle lying in the range 30° to 80°, and more particularly at an angle of 60° relative to the longitudinal direction of the vehicle.

7. A motor vehicle according to any preceding claim, wherein the fastener means (24) fastening the absorber (20) to the body-in-white (12) are clip-fastener means.

8. A motor vehicle according to any preceding claim, wherein the absorber (20) is made of plastics material, in particular of polypropylene (PP).

9. A motor vehicle according to any preceding claim, wherein the absorber (20) is incorporated in anti-denting reinforcement for placing in register with aA motor vehicle bodywork part (22).

10. A motor vehicle according to any preceding claim, wherein the absorber (20) does not have means fastening it directly to the beam (18).

11. A method of mounting a motor vehicle according to any preceding claim, wherein:
• fastening the beam (18) to the body-in-white (12) via first fastener means; and
• fastening the absorber to the body-in-white (12) via second fastener means (24, 25) distinct from the first fastener means.
